(19) Europäisches Patentamt
European Patent Office
Office européen des brevets

(11) Publication number: **0 068 634**
**B1**

(12) **EUROPEAN PATENT SPECIFICATION**

(45) Date of publication of patent specification: **02.05.85**

(51) Int. Cl.[4]: **C 25 B 1/00,** C 01 C 3/11 // G02F1/17, H01M4/00

(21) Application number: **82302686.9**

(22) Date of filing: **25.05.82**

(54) **A process of making iron (III) hexacyanoferrate (II) and to iron (III) hexacyanoferrate (II) made thereby.**

(30) Priority: **26.05.81 JP 79912/81**
**02.10.81 JP 156970/81**

(43) Date of publication of application:
**05.01.83 Bulletin 83/01**

(45) Publication of the grant of the patent:
**02.05.85 Bulletin 85/18**

(84) Designated Contracting States:
**BE CH DE FR GB IT LI NL SE**

(56) References cited:

**CHEMICAL ABSTRACTS, vol. 92, no. 10, March 1980, page 573, no. 84930p, Columbus Ohio (USA); N.N. PLOTNIKOV et al.: "Berlin whites"**
**CHEMICAL ABSTRACTS, vol. 92, no. 6, February 1980, page 496, no. 49476y, Columbus Ohio (USA);**
**A.T.KUHN: "Industrial electrochemical processes", 1971, Elsevier Publishing Company, New York (USA);**

(73) Proprietor: **SEIKO INSTRUMENTS & ELECTRONICS LTD.**
**31-1, Kameido 6-chome**
**Koto-ku Tokyo (JP)**

(72) Inventor: **Itaya, Kingo**
**2-3-12, 1-chome Maruyama**
**Magajo-shi Kiyagi-ken (JP)**
Inventor: **Shibayama, Kimio**
**1-4, 2-chome Yagiyamahoncho**
**Sendai-shi Miyagi-ken (JP)**
Inventor: **Toshima, Shinobu**
**8-8, 1-chome Yagiyamaminami**
**Sendai-shi Miyagi-ken (JP)**
Inventor: **Iwasa, Koji**
**KABUSHIKI KAISAHA DAINI SEIKOSHA 31-1, 6-chome**
**Kameido Kogo-ku Tokyo (JP)**
Inventor: **Ataka, Tatsuaki**
**KABUSHIKI KAISHA DAINI SEIKOSHA 31-1, 6-chome**
**Kameide Koto-ku Tokyo (JP)**

(74) Representative: **Caro, William Egerton et al**
**J. MILLER & CO. Lincoln House 296-302 High Holborn**
**London WC1V 7JH (GB)**

**EP 0 068 634 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to processes of making or synthesizing iron (III) hexacyanoferrate (II) and to iron (III) hexacyanoferrate (II) made thereby.

Iron (III) hexacyanoferrate (II) is a blue pigment which is commonly known as Prussian blue. It is well known that mixing an aqueous solution containing $Fe(II)(CN)_6^{4-}$ or $Fe(III)(CN)_6^{3-}$ results in a variety of precipitates as shown in Table 1. Prussian blue has been widely utilised in qualitative analysis and as a blue pigment for printing inks etc. since its discovery in 1704.

Table 1 is a list of the materials given when aqueous solutions containing Fe(II) or Fe(III) ion are mixed with aqueous solutions containing $[Fe(II)(CN)_6]^{4-}$ or $[Fe(III)(CN)_6]^{3-}$ ion.

TABLE 1

| | Cyanoferrate ion | |
|---|---|---|
| Iron ion | Ferrocyanide ion $[Fe(II)(CN)_6]^{4-}$ | Ferricyanide ion $[Fe(III)(CN)_6]^{3-}$ |
| ferrous ion | Everitt's salt | Turnbull's blue |
| Fe(II) | $K_2Fe(II)[Fe(II)(CN)_6]$ white precipitate | $KFe(II)[Fe(III)(CN)_6]$ blue precipitate |
| ferric ion | Prussian blue | Prussian brown |
| Fe(III) | $KFe(III)[Fe(II)(CN)_6]$ or $Fe(III)_4[Fe(II)(CN)_6]_3$ blue precipitate | clear brown solution |

Prussian blue and Turnbull's blue had been regarded to be different compounds until recently, but have now been found by a variety of physiochemical measurements including Mössbauer spectroscopy and absorption spectroscopy to be the same chemical compound.

Known processes for making Prussian blue comprise either mixing an iron (III) ion-containing solution with a hexacyanoferrate (II) ion-containing solution or mixing an iron (II) ion-containing solution with a hexacyanoferrate (III) ion-containing solution, and causing Prussian blue to deposit as an insoluble blue precipitate. The iron (III) ion-containing solution used in the known process is, for example, an aqueous solution of iron (III) chloride or iron (III) sulphate, and the hexacyanoferrate (II) ion-containing solution used is, for example, an aqueous solution of potassium hexacyanoferrate (II) or sodium hexacyanoferrate (II). In the known process where an iron (II) ion-containing solution and a hexacyanoferrate (III) ion-containing solution are used an example of the former is an aqueous solution of iron (II) chloride or iron (II) sulphate, and an example of the latter is an aqueous solution of potassium hexacyanoferrate (III) or sodium hexacyanoferrate (III). The known processes are such that it is very difficult to control externally the rate of reaction because, as soon as the two solutions are mixed, the chemical reaction takes place very rapidly. Further, it is impossible to deposit and form a thin film of iron (III) hexacyanoferrate (II) complex directly on a substrate because the reaction producing iron (III) hexacyanoferrate (II) occurs simultaneously throughout the solution mixture to form and precipitate insoluble particles of the three-dimensional complex. While it is possible to form an iron (III) hexacyanoferrate (II) salt-containing deposit on a substrate by applying a dispersion of Prussian blue pigment in a suitable paint on the substrate, no process has been available for forming a thin film of iron (III) hexacyanoferrate (II) directly on a substrate.

According to one aspect of the present invention there is provided a process for making iron (III) hexacyanoferrate (II) characterised by comprising the steps of immersing a pair of electrodes in an electrolyte including an iron (III) ion-containing solution and a hexacyanoferrate (III) ion-containing solution in admixture, and effecting electrolysis with one of said pair of electrodes acting as an anode and the other acting as a cathode, to deposit iron (III) hexacyanoferrate (II) on the surface of the cathode.

Preferably the cathode is made of an inert metal or an electrically conductive or semi-conductive metal oxide or a metal or electrically non-conductive material coated with an inert metal and/or electrically conductive or semi-conductive metal oxide. The inert metal may be any one or more of platinum, gold, rhodium, palladium, ruthenium, silver, stainless steel and carbon.

The said electrically non-conductive material may be a ceramic material, glass or a synthetic resin material.

Preferably the iron (III) ion-containing solution is a solution of one or more of an iron (III) salt of an inorganic acid, and iron (III) salt of an organic and an iron (III) ammonium salt. Thus the iron (III) ion-containing solution may be a solution of one or more of iron (III) chloride, iron (III) sulphate, iron (III) perchlorate, iron (III) nitrate, iron (III) phosphate and iron (III) pyrophosphate; iron (III) oxalate, iron (III)

acetate, iron (III) citrate, iron (III) lactate, and iron (III) tartrate, iron (III) ammonium sulphate, iron (III) ammonium oxalate and iron (III) ammonium citrate.

Preferably the hexacyanoferrate (III) ion-containing solution is a solution of one or more of potassium hexacyanoferrate (III), sodium hexacyanoferrate (III), lithium hexacyanoferrate (III), rubidium hexacyanoferrate (III) and ammonium hexacyanoferrate (III).

In a preferred embodiment, the electrolyte includes an inorganic acid and/or an organic acid and/or a salt thereof. The said electrolyte may include one or more of hydrochloric acid, sulphuric acid, perchloric acid, nitric acid, phosphoric acid, pyrophosphoric acid, hexafluorophosphoric acid, boric acid, tetrafluoroboric acid, carbonic acid, oxalic acid, acetic acid, citric acid, lactic acid, tartaric acid, phthalic acid, a lithium salt, a sodium salt, a potassium salt, a rubidium salt, a calcium salt, a magnesium salt, an ammonium salt and a tetraalkyl ammonium salt of the foregoing acids.

Advantageously the iron (III) ion-containing solution is an aqueous solution containing iron (III) ion at a concentration of not less than 10 millimoles/litre, the hexacyanoferrate (III) ion-containing solution is an aqueous solution containing hexacyanoferrate (III) ion at a concentration of not less than 10 millimoles/litre, the iron (III) ion and the hexacyanoferrate (III) ion in the electrolyte being at concentrations of at least 5 millimoles/litre.

It has been found desirable that the pH of said electrolyte is in the range pH 0.3 to pH 5.

The electrolysis may be potentiostatic electrolysis in which a saturated calomel reference electrode for determining a reference potential is immersed in the electrolyte, the electrode potential of the cathode being controlled so as to be constant in the range between $-0.2$ V and $+0.8$ V. Alternatively, the electrolysis is galvanostatic electrolysis comprising immersing said electrodes in the electrolyte and supplying a constant current between the electrodes such that the polarization potential of the cathode does not rapidly become negative and is kept at a substantially constant potential during the course of electrolysis, the electrolytic current density being substantially constant between 1 $\mu A/cm^2$ and 1 $mA/cm^2$ relative to the surface area of the cathode.

According to another aspect of the present invention there is provided iron (III) hexacyanoferrate (II) made by the process according to the present invention.

The invention is illustrated, merely by way of example, in the accompanying drawings in which:—

Fig. 1 is a cyclic voltammogram of an aqueous admixture of iron (III) chloride and potassium hexacyanoferrate (III);

Fig. 2 is a graph showing the relationship of electrolytic current at an electrolytic potential of 0.5 V (vs S.C.E.) to the absorbance of an electrolytic solution at a wavelength of 500 nm when the concentration of the electrolytic solution is varied;

Fig. 3 is an absorption spectrum wavelength diagram of iron (III) hexacyanoferrate (II) made by a process according to the present invention;

Fig. 4 is a graph showing the relationship of the electrolytic potential under potentiostatic electrolysis to the electrolytic efficiency and to charge density;

Fig. 5 is a graph showing the variation of electrolytic potential with time when galvanostatic electrolysis is effected at different current densities while the concentration of an electrolytic solution is fixed;

Fig. 6 is a graph showing the variation of electrode potential with time when the concentration of an electrolytic solution is varied at a fixed current density;

Fig. 7A illustrates the crystal lattice of insoluble Prussian blue, and Fig. 7B illustrates the crystal lattice of soluble Prussian blue;

Fig. 8 illustrates the construction of a button type secondary battery incorporating iron (III) hexacyanoferrate (II) made by a process according to the present invention; and

Fig. 9 is a graph showing galvanic charge-discharge characteristics of the secondary battery shown in Fig. 8 at 0.1 $mA/cm^2$.

It has been believed that the material called Prussian blue consists of a group of the two compounds, namely insoluble Prussian blue and soluble Prussian blue:

Water-insoluble Prussian blue: $Fe_4[Fe(CN)_6]_3$

Water-soluble Prussian blue: $KFe[Fe(CN)_6]$

Some recent reports reveal that this difference is due to an analytical error, and they have the same crystalline structure and are essentially the same compound. It is believed that such an analytical problem originates from the fact that Prussian blue has a substantially loose crystalline lattice structure of zeolitic nature as evidenced by a lattice constant of 10.2 Å, a lattice spacing of 5.1 Å, and a "bottle-neck" of 3.5 Å. This zeolitic nature causes considerable absorption of a variety of molecules and ions, for instance, water or certain organic solvents and alkali metal ions or other metal ions, giving rise to analytical difficulties.

It is difficult to determine the composition of Prussian blue by analysis because known methods of making Prussian blue comprise mixing an aqueous solution containing Fe(III) ion with an aqueous solution containing $Fe(II)(CN)_6^{4-}$, the reaction taking place virtually instantaneously after mixing of the two solutions. The end product, that is, Prussian blue, which precipitates as very small crystals of a substantially insoluble salt, tends to form a colloidal solution and as a result, it apparently absorbs more molecules and ions because of its increased surface area.

According to a process according to the present invention, iron (III) hexacyanoferrate (II) can be made

as a uniform contiguous film having a predetermined composition. The iron (III) ion-containing solutions which can be used in the practice of the present invention include solutions of one or more of the following compounds: iron (III) salts of inorganic acids such as, for example, iron (III) chloride, iron (III) sulphate, iron (III) perchlorate, iron (III) nitrate, iron (III) phosphate, and iron (III) pyrophosphate; iron (III) salts of organic acids such as, for example, iron (III) oxalate, iron (III) acetate, iron (III) citrate, iron (III) lactate, and iron (III) tartrate; and iron (III) ammonium double salts such as, for example, iron (III) ammonium sulphate, iron (III) ammonium oxalate, and iron (III) ammonium citrate. It will be readily understood that any compound may generally be used to form the iron (III) ion-containing solution required for the present invention as long as it can dissociate iron (III) ions in solution.

The hexacyanoferrate (III) ion-containing solutions which can be used in the practice of the present invention include solutions of one or more of the following compounds: hexacyanoferrate (III) such as, for example, potassium hexacyanoferrate (III), sodium hexacyanoferrate (III), lithium hexacyanoferrate (III), rubidium hexacyanoferrate (III), and ammonium hexacyanoferrate (III). It will be readily understood that any compound may generally be used to form the hexacyanoferrate (III) ion-containing solution required for the present invention as long as it can provide hexacyanoferrate (III) ions in solution.

The iron (III) ion-containing solution and the hexacyanoferrate (III) ion-containing solution as described above are preferably prepared separately before they are mixed ready for use, because the solutions of hexacyanoferrates (III) generally tend to decompose in the presence of light or oxygen and such tendency is enhanced by the coexistence of iron (III) ions in solution. To any of the iron (III) ion-containing solution, the hexacyanoferrate (III) ion-containing solution, and the admixtures thereof may be added at least one of the following compounds: inorganic and organic acids such as, for example, hydrochloric acid, sulphuric acid, perchloric acid, nitric acid, phosphoric acid, pyrophosphoric acid, hexafluorophosphoric acid, boric acid, tetrafluorophosphoric acid, carbonic acid, oxalic acid, acetic acid, citric acid, lactic acid, tartaric acid and phthalic acid, and salts of the foregoing inorganic and organic acids with, for example, lithium, sodium, potassium, rubidium, calcium, magnesium, ammonium, and tetraalkylammonium, in a dissolved form as a supporting electrolyte for ensuring consistent electrolysis. Such supporting electrolytes are effectively added for the purposes of adjusting the acidity of the solution, increasing the conductivity of the solution and improving chemical stability, and it is thus apparent that those compounds which are generally used as supporting electrolytes, *pH adjustors* and buffers in preparing electrolytic solutions may be utilised in the practice of the present invention.

The solvent which may be used in preparing the iron (III) ion-containing solution and the hexacyanoferrate (III) ion-containing solution as described above is typically water, although polar solvents such as, for example, acetonitrile, tetrahydrofuran, and N,N-dimethylformamide, may also be used. It will be readily understood that any desired solvent may be used as long as the iron (III) ion, hexacyanoferrate (III) ion and optionally, supporting electrolyte are stable in the solvent.

The material of which electrodes used in electrolysis are made, in principle, may be any of those materials whose surface at least is electronically conductive, for example, metals, carbon, conductive metal oxides, semiconductors, conductive plastics materials, mercury, etc. For the purpose of forming a stable blue thin film of a iron (III) hexacyanoferrate (II) three-dimensional complex intimately adhered to a cathode surface, at least the cathode electrode of a pair of electrodes is made of a solid which is an inert metal such as platinum, gold, silver, rhodium, palladium, ruthenium, stainless steel, carbon, etc. or a conductive metal oxide such as tin oxide, indium oxide, cadmium oxide, antimony oxide, etc., or a semiconductor, or another solid body of a base metal or ceramic, glass or plastic material which is coated at least on the surface with the foregoing inert metal, carbon, conductive metal oxide or semiconductor.

The electrolysis may be either potentiostatic or galvanostatic electrolysis.

In potentiostatic electrolysis, a pair of electrodes as described above are immersed in an admixture of an iron (III) ion-containing solution and an hexacyanoferrate (III) ion-containing solution as described above, a reference electrode, for example, a saturated calomel electrode commonly used in electrochemical cells being provided, and controlled electrolysis is effected such that the polarization potential of the cathode of the pair of electrodes is kept constant with respect of the reference electrode. Iron (III) hexacyanoferrate (II) can be deposited at any polarization potential of the cathode as long as the cathode is polarized negative with respect to the other electrode. Particularly when it is intended to deposit an intimately adhering, stable, thin film of iron (III) hexacyanoferrate (II) controlled electrolysis is preferably effected such that the polarization potential of the cathode is kept constant in the range from about $-0.2$ V to about $+0.8$ V with respect to the reference electrode. Although iron (III) hexacyanoferrate (II) can be made at cathode potentials outside the range of $-0.2$ V and $+0.8$ V, adhesion of the deposited film will deteriorate at reduced current efficiency.

In galvanostatic electrolysis, controlled electrolysis is effected by supplying current between a pair of electrodes such as described above so that a constant current density develops at the cathode. When it is intended to form consistently a firmly adhering thin film of iron (III) hexacyanoferrate (II), it is necessary to set the current value within the range referred to, above which the electrode potential would widely varying during the electrolysis. If the supply current exceeds the limit, a sudden drop of the electrode potential would occur during electrolysis, and a film which poorly adheres to the electrode surface would deposit at a reduced electrolysis efficiency.

Irrespective of a choice between potentiostatic electrolysis and galvanostatic electrolysis, the rate of

deposition of iron (III) hexacyanoferrate (II) on the cathode is proportional to cathode current. Further, the quantity of iron (III) hexacyanoferrate (II) deposited is proportional to the quantity of charge through the cathode.

In the case of potentiostatic electrolysis, current can be varied with voltage. Thus, the rate of deposition may be readily controlled indirectly by controlling the cathode potential and the quantity of deposition may be monitored by means of a colomb meter. In the case of galvanostatic electrolysis, the rate of deposition may be directly controlled by setting a constant current value and the quantity of deposition may be arbitrarily controlled simply by determining the time of electrolysis.

It is preferable in the practice of the present invention to adjust the concentrations of iron (III) ion and hexacyanoferrate (III) ion and the pH of the solution mixture to ranges sufficient to provide for practical acceptable stability. It has been found that iron (III) hexacyanoferrate (II) can be made as a stable deposit when both the iron (III) ion and hexacyanoferrate (III) ion are present at concentrations of not less than 5 millimoles/litre in the solution. It has also been found that there is no upper limit to the concentration for both the iron (III) ion and hexacyanoferrate (III) ion and they may be present in the solution mixture up to saturation. The pH of the solution is critical, and a pH range from 0.3 to 5 has been found satisfactory to form acceptable deposits. Strongly acidic solution mixtures having a pH of lower than 0.2 will result in a reduced current efficiency and formation of a brittle deposit, whereas neutral or alkaline solutions or solutions having a pH of higher than 5 will result in an unsatisfactory deposit because an iron hydroxide contaminant is codeposited with the iron (III) hexacyanoferrate (II) deposit on the cathode.

The invention will be further illustrated by reference to the following Examples.

Example 1

An aqueous solution containing iron (III) chloride ($FeCl_3$) at a concentration of 25 millimoles/litre as the iron (III) ion-containing solution was mixed with an aqueous solution containing sodium hexacyanoferrate (III) ($Na_3Fe(CN)_6$) at a concentration of 25 millimoles/litre as the hexacyanoferrate (III) ion-containing solution, in equal volumes to produce a clear brown solution.

Two electrodes, that is, a working electrode in the form of a platinum plate having a surface area of 0.1 $cm^2$ and a counter electrode in the form of a platinum plate having a surface area of 10 $cm^2$ were immersed in this brown solution as an electrolyte to form an electrolytic cell and electrolysis was then effected. Galvanostatic electrolysis was effected at a current density of 50 $\mu A/cm^2$ with the working electrode acting as the cathode, a blue insoluble deposit being formed on the surface of the working electrode.

Example 2

An aqueous solution containing iron (III) sulphate ($Fe_2(SO_4)_3$) at a concentration of 25 millimoles/litre as the iron (III) ion-containing solution was mixed with an aqueous solution containing sodium hexacyanoferrate (III) ($Na_3Fe(CN)_6$) as the hexacyanoferrate (III) ion-containing solution, in equal volumes to produce a clear brown solution.

Thereafter, cathodic galvanostatic electrolysis was effected at a current density of 50 $\mu A/cm^2$ in accordance with the procedure described in Example 1, a blue insoluble electrolytic deposit being formed on the surface of the working electrode.

Example 3

An aqueous solution containing iron (III) perchlorate ($Fe(ClO_4)_3$) at a concentration of 25 millimoles/litre as the iron (III) ion-containing solution and an aqueous solution containing potassium hexacyanoferrate (III) ($K_3Fe(CN)_6$) at a concentration of 25 millimoles/litre as the hexacyanoferrate (III) ion-containing solution were mixed in equal volumes to produce a clear brown solution.

Thereafter, cathodic galvanostatic electrolysis was effected in accordance with the procedure described in Example 1, a blue insoluble electrolytic deposit being formed on the surface of the working electrode.

Example 4

An aqueous solution containing iron (III) chloride ($FeCl_3$) at a concentration of 25 millimoles/litre as the iron (III) ion-containing solution and an aqueous solution containing potassium hexacyanoferrate (III) ($K_3Fe(CN)_6$) at a concentration of 25 millimoles/litre as the hexacyanoferrate (III) ion-containing solutions were mixed in equal volume to produce a clear brown solution.

Thereafter electrolysis was effected in accordance with the procedure described in Example 1, a blue insoluble electrolytic deposit being formed on the surface of the working electrode.

Example 5

An aqueous solution containing iron (III) chloride ($FeCl_3$) at a concentration of 50 millimoles/litre as the iron (III) ion-containing solution and an aqueous solution containing potassium hexacyanoferrate (III) ($K_3Fe(CN)_6$) as the hexacyanoferrate (III) ion-containing solution were mixed in equal volumes, and the resulting solution was added to an equal volume of an aqueous solution containing potassium chloride (KCl) at a concentration of 1 mole/litre. A clear brown solution was obtained.

Thereafter, electrolysis was effected in accordance with the procedure described in Example 1, a blue insoluble electrolytic deposit being formed on the working electrode.

Example 6

An aqueous solution prepared by dissolving 25 millimoles/litre of iron (III) sulphate ($Fe_2(SO_4)_3$) in water and adding sulphuric acid ($H_2SO_4$) thereto to adjust the acidity to 0.01 N as the iron (III) ion-containing solution and an aqueous solution prepared by dissolving 25 millimoles/litre of sodium hexacyanoferrate (III) ($Na_3Fe(CN)_6$) in water and adding sulphuric acid thereto to adjust the aciditity to 0.01 N as the hexacyanoferrate (III) ion-containing solution, were mixed in equal volumes to produce a clear brown solution.

Thereafter, electrolysis was effected in accordance with the procedure described in Example 1, a blue insoluble electrolytic deposit being formed on the surface of the working electrode.

Example 7

An aqueous solution prepared by dissolving 25 millimoles/litre of iron (III) chloride in water and adjusting the pH thereof to 2.0 with a buffer solution "Clark-Lubs" as the iron (III) ion-containing solution, and an aqueous solution prepared by dissolving 25 millimoles/litre of potassium hexacyanoferrate (III) in water and adjusting the pH value to 2.0 with a buffer solution "Clark-Lubs" as the hexacyanoferrate (III) ion-containing solution, were mixed in equal volumes to produce a clear brown solution.

Thereafter, electrolysis was effected in accordance with the procedure described in Example 1, a blue insoluble electrolytic deposit being formed on the surface of the working electrode.

Example 8

A solution prepared by dissolving 100 millimoles/litre of iron (III) chloride in aqueous hydrochloric acid having an acid concentration of 0.1 N as the iron (III) ion-containing solution and a solution prepared by dissolving 100 millimoles/litre of potassium hexacyanoferrate (III) in 0.1 N aqueous hydrochloric acid as the hexacyanoferrate (III) ion-containing solution, were mixed to produce a clear brown solution.

Thereafter, electrolysis was effected in accordance with the procedure described in Example 1, a blue insoluble electrolytic deposit being formed on the surface of the working electrode.

As seen from the foregoing Examples 1 to 8, when solutions consisting of an admixture of an iron (III) ion-containing solution and a hexacyanoferrate (III) ion-containing solution were prepared using various iron (III) salts and various hexacyanoferrate (III) salts, and optionally with the addition of an acid or salt, the solutions were clear brown. Cathodic electrolysis using these solutions as an electrolyte always resulted in a blue insoluble electrolytic deposit being formed on the surface of the working electrode.

Each solution containing both iron (III) ions and hexacyanoferrate (III) ions was a clear brown solution because these ions reach chemical equilibrium in the solution which is represented by the following reaction scheme:

$$Fe^{3+} + Fe(III)(CN)_6^{3-} \rightleftarrows Fe(III)Fe(III)(CN)_6 \qquad (1)$$

The brown colour of the solution is attributable to the absorption by the $Fe(III)Fe(III)(CN)_6$ complex.

When the solution is subjected to electrolysis, a blue insoluble deposit is formed on the cathode surface, which is believed to be the electrolytic product resulting from the following equations:

$$3Fe(III)Fe(III)(CN)_6 + Fe^{3+} \xrightarrow{+3e^-} Fe(III)_4[Fe(II)(CN)_6]_3 \qquad (2)$$

$$Fe(III)Fe(III)(CN)_6 + M^{+} \xrightarrow{+e^-} M\ Fe(III)[Fe(II)(CN)_6] \qquad (3)$$

where $M^+$ is a metal ion other than Fe present in the solution. The electrolytic deposits are insoluble complexes of iron (III) hexacyanoferrate (II) which are known as water-insoluble Prussian blue or water-soluble Prussian blue, respectively.

Examples 9 and 10 are given in order to demonstrate that the electrolytic deposit formed on the working electrode or cathode as a result of electrolysis of the solution containing iron (III) ions and hexacyanoferrate (III) ions is iron (III) hexacyanoferrate (II).

Example 9

The electrolyte used in this example was a clear brown solution produced in Example 8. Three electrodes, a working electrode in the form of a platinum plate having an area of 0.1 $cm^2$, a counter electrode in the form of a platinum plate having an area of 10 $cm^2$, and a reference electrode in the form of a saturated calomel electrode (S.C.E.) were immersed in the electrolyte to form an electrolytic cell. A potentiostat was used as an electric power source for electrolysis.

1) Electrolysis was carried out by cyclic voltammetry with the voltage varying at a scanning rate of 50 millivolts/sec with respect to the working electrode. As long as the potential of the working electrode was

+0.8 V or more negative with respect to the reference electrode, a blue insoluble electrolytic deposit was formed on the surface of the working electrode similar to those obtained in Examples 1 to 8. The cyclic voltammogram is shown in Fig. 1.

As seen from Fig. 1 a waveform developed at potentials from about 0.8 V to about 0.5 V, is different from the waveform due to a reduction of iron (III) ion and reduction of hexacyanoferrate (III) ion.

2) Next, four solutions having different concentrations of iron (III) ion and hexacyanoferrate (III) ion were prepared by diluting the electrolyte used in 1) with 0.1 N hydrochloric acid. These solutions were equal in acid concentration and the concentration of the $Fe(III)Fe(III)(CN)_6$ complex in the solution mixtures depended on the concentrations of the iron (III) ions and hexacyanoferrate (III) ions in accordance with reaction scheme (1) above. The absorption at wavelength of 500 nm is solely attributable to the $Fe(III)Fe(III)(CN)_6$ complex. Thus, absorption of the four solutions at a wavelength of 500 nm was determined. The results show that the absorption was proportional to the concentration of the solutions.

Using the thus prepared solutions having different concentrations, cyclic voltammetry was carried out in the same manner as in 1). As 1), a blue insoluble electrolytic deposit was observed at working electrode potentials more negative than 0.8 V with respect to the reference electrode for all the four solutions. For each of the solutions having different concentrations, the electrolytic current was determined at a potential of the working electrode of 0.5 V with respect to the reference electrode. Fig. 2 shows the current values thus obtained in relation to absorption of the solutions at a wavelength of 500 nm. As seen from Fig. 2 the electrolytic current at a potential of 0.5 V is proportional to the absorption at a wavelength of 500 nm, that is, the concentration of the $Fe(III)Fe(III)(CN)_6$ complex.

The results of 1) and 2) reveal that formation of an insoluble blue deposit on the surface of the working electrode is by the electrolytic reduction of the $Fe(III)Fe(III)(CN)_6$ complex at potentials from about 0.8 V to about 0.4 V with respect to the reference electrode.

Example 10

The electrolytic solution used in this example was the clear brown solution produced in Example 8. Two electrodes, a working electrode in the form of a glass substrate coated with a transparent conductive layer of tin oxide having an area of 1.0 $cm^2$ and a counter electrode in the form of a platinum plate having an area of 10 $cm^2$ were immersed in the solution as an electrolyte to form an electrolytic cell.

Galvanostatic electrolysis was effected for 2 minutes at a current of 50 μA with the working electrode acting as the cathode. A blue insoluble electrolytic deposit was formed as a thin film intimately adhered to the surface of the transparent tin oxide electrodes.

The transparent tin oxide electrode having the electrolytic deposit thereon was removed from the cell, rinsed, dried, and then the optical absorption spectrum was determined by means of a spectrophotometer. The result is shown in Fig. 3. The absorption spectrum of a colloidal dispersion of Prussian blue or iron (III) hexacyanoferrate (II) pigment which is chemically synthesized by any of the conventional processes has the absorption maximum at a wavelength of about 680 nm. As seen from Fig. 3, the blue insoluble electrolytic deposit formed on the tin oxide surface in this example also exhibited a similar absorption maximum at about 680 nm.

The result of Example 10 shows that the blue insoluble electrolytic deposit produced was iron (III) hexacyanoferrate (II) generally known as Prussian blue pigment.

Next Example 11 was carried out to determine whether the deposit is $K^+$ ion-containing soluble Prussian blue or $K^+$ ion-free insoluble Prussian blue.

Example 11

The clear brown solution of Example 8, was used and a cathode in the form of a platinum plate having an area of 10 $cm^2$ on the surface of which iron (III) hexacyanoferrate (II) is to be made and an anode in the form of a platinum plate having an area of about 100 $cm^2$ were immersed in the solution. With a current density of 20 $\mu A/cm^2$ at the cathode, galvanostatic electrolysis was effected for about 8 minutes. At the end of electrolysis, a blue uniform, contiguous film was deposited on the cathode.

Next, the composition of the deposit on the cathode was determined by chemical analysis. Quantitative analysis of iron ions was carried out by atomic absorption analysis and quantitative analysis of potassium ions was carried out by flame spectrochemical analysis. In addition, the quantity of iron (III) involved in oxidation-reduction reaction represented by the following equations was determined by means of a coulomb meter. The composition of the deposit was thus determined through a combination of the chemical analysis and electrochemical measurement.

The electrochemical measurement aims at deciding which one of the equations (4) and (5) takes place. Depending on whether the deposit is the insoluble Prussian blue or the soluble Prussian blue, the quantity of electricity required for oxidation-reduction differs.

Insoluble Prussian blue

$$Fe(III)_4[Fe(II)(CN)_6]_3+4e^-+4M^+ \rightleftarrows M_4Fe(II)_4[Fe(II)(CN)_6]_3 \quad (4)$$

Soluble Prussian blue

$$KFe(III)[Fe(II)(CN)_6]+e^-+M^+ \rightleftarrows MKFe(II)[Fe(II)(CN)_6] \quad (5)$$

In the above, $M^+$ is an alkali metal ion such as $K^+$.

It is apparent that the ratio of the number of iron atoms identified by the atomic absorption analysis to the number (n) of iron atoms identified by the electrochemical measurement is 7:4 in the case of insoluble Prussian blue and 2:1 in the case of soluble Prussian blue.

The results are shown in Table 2. The measured value (μg) of iron atom obtained by the atomic absorption analysis is shown with respect to the quantity of charge (mC) required for oxidation-reduction, as well as the measured value of potassium atom obtained by the flame spectrochemical analysis. Experimental values are shown in comparison with calculated values for both cases.

TABLE 2

unit: μg/mC

| | Found | Calculated for $Fe_4[Fe(CN)_6]_3$ | Calculated for $KFe[Fe(CN)_6]$ |
|---|---|---|---|
| Fe | 1.02 | 1.01 | 1.16 |
| K | 0.06 | 0 | 0.41 |

As seen from Table 2, the iron (III) hexacyanoferrate (II) made by the process according to the present invention has the composition:

$$Fe_4[Fe(CN)_6]_3$$

As for the material of which the electrode used in a process according to the present invention it will be appreciated from formulae (1), (2) and (4) that any desired material may, in principle, be used as long as at least the surface of the electrode is electrically conductive. In order to prevent the iron (III) hexacyanoferrate (II) from being contaminated with impurities as a result of side reactions with the electrode itself taking place during electrolysis, a preferred choice is an electrode which is formed with an inert material such as an inert metal, carbon, or a conductive metal oxide at least on the surface. Platinum is used as a typical example of an inert metal in Examples 1 to 9 and a tin oxide electrode is used as a typical example of a metal oxide in Examples 10 and 11. A carbon electrode is used as another example in Example 12 to be described below.

Example 12

The electrolytic solution used in this example was a clear brown solution mixture produced in Example 1.

A working electrode in the form of a glassy carbon electrode having a surface area of 0.1 $cm^2$ and a counter electrode in the form of a graphite electrode having a surface area of 10 $cm^2$ were immersed in the solution. With the working electrode acting as the cathode, galvanostatic electrolysis was effected for 2 minutes at a current density of 50 $\mu A/cm^2$.

As in Examples 1 to 10, a blue insoluble electrolytic deposit was formed on the surface of the working electrode or glassy carbon electrode.

The electrolysis may be galvanostatic and the potentiostatic electrolysis to make iron (III) hexacyanoferrate (II) on the surface of the working electrode according to the present invention as long as electrolysis is effected such that the working electrode is polarized negative with respect to the counter electrode.

However, electrolysis should be effected at a limited electrolytic potential in order to form efficiently iron (III) hexacyanoferrate (II) as a thin film intimately adhered to the surface of the working electrode. Examples 13 and 14 were carried out to determine an appropriate range for the electrolytic potential under electrolysis.

Example 13

A solution prepared by dissolving 20 millimoles/litre of iron (III) chloride ($FeCl_3$) in 0.1 N hydrochloric acid was used as the iron (III) ion-containing solution, was mixed with a solution prepared by dissolving 20 millimoles/litre of potassium hexacyanoferrate (III) ($K_3Fe(III)(CN)_6$) in 0.1 N hydrochloric acid was used as the hexacyanoferrate (III) ion-containing solution, to produce a clear brown solution.

A working electrode in the form of a platinum electrode having an area of 0.1 $cm^2$, a counter electrode in the form of a platinum electrode having an area of 10 $cm^2$, and a reference electrode in the form of a saturated calomel electrode were immersed in the above solution to form an electrolytic cell. A potentiostat was used as an electric power source for electrolysis.

Potentiostatic electrolysis was effected while the potential of the working electrode was progressively varied from +1.0 V to the negative with respect to the reference electrode. A blue electrolytic deposit similar to that obtained in Examples 1 to 11 began to form on the working electrode surface at a potential of about +0.8 V, and the formation of iron (III) hexacyanoferrate (II) as a blue deposit was observed at potentials in the range between +0.8 V and −0.2 V.

Potentiostatic electrolysis was effected for 20 seconds at different potentials, and the charge density of the iron (III) hexacyanoferrate (II) deposit on the working electrode was measured as well as the electrolytic efficiency. The results are plotted in a graph in Fig. 4. As seen from Fig. 4, the electrolytic efficiency of making iron (III) hexacyanoferrate (II) is maximum when potentiostatic electrolysis is effected at a potential of about 0.5 V with respect to the saturated calomel electrode.

The iron (III) hexacyanoferrate (II) deposits on the working electrode at different potentials were determined for adhesion to the electrode surface by performing a peel test using an adhesive cellophane tape. Good adhesion was found for deposits formed at potentials from about +0.8 V to about +0.4 V whereas the deposits formed at more negative potentials exhibited poor adhesion.

Example 14

An aqueous solution containing iron (III) chloride ($FeCl_3$) at a concentration of 25 millimoles/litre as the iron (III) ion-containing solution was mixed with an equal volume of an aqueous solution containing potassium hexacyanoferrate (III) at a concentration of 25 millimoles/litre as the hexacyanoferrate (III) ion-containing solution to produce a clear brown solution. A working electrode, a counter electrode and a reference electrode as used in Example 12 were immersed in this solution, and the resulting electrolytic cell was operated with a potentiostat.

With the working electrode acting as the cathode, galvanostatic electrolysis was effected for 70 seconds or more at different current densities. The potential of the working electrode under electrolysis at the different current densities was measured with respect to the reference electrode to monitor its variation with time. The result of measurement is shown in Fig. 5. As seen from Fig. 5, the potential of the working electrode under electrolysis is kept within the range between 0.5 V and 0.8 V with respect to the reference electrode throughout the entire time at current densities of lower than 50 $\mu A/cm^2$ (inclusive). For electrolysis at current densities of higher than 75 $\mu A/cm^2$, however, the potential of the working electrode changed to a value more negative than 0.5 V at an intermediate point of time.

Next, the adhesion of the iron (III) hexacyanoferrate (II) deposit formed on the working electrode at different current densities was determined by a peel test using an adhesive cellophane tape. Good adhesion was found for the deposits formed by galvanostatic electrolysis at a potential of the working electrode in the range between 0.8 V and 0.5 V whereas the deposits formed at current densities causing the potential to change to a value more negative than 0.5 V exhibited poor adhesion.

As apparent from Examples 13 and 14, potentiostatic electrolysis wherein the electrode potential is always kept within the range from about 0.8 V to about 0.5 V with respect to the aturated calomel electrode, or galvanostatic electrolysis wherein the electrode potential does not change to a value less than 0.5 V with respect to the saturated calomel electrode during electrolysis may preferably be employed in a process according to the present invention for making iron (III) hexacyanoferrate (II) in order to form an intimately adhering deposit on the electrode surface at increased efficiency.

It has been found that iron (III) hexacyanoferrate (II) can be deposited by electrolysis as long as both the concentrations of iron (III) ion and hexacyanoferrate (III) ion in the electrolytic solution are not less than 5 millimoles/litre. In the case of potentiostatic electrolysis, a deposit of iron (III) hexacyanoferrate (II) can be formed as an insoluble deposit intimately adhering to the electrode surface by effecting electrolysis at electrode potentials in the range between about 0.8 V and about 0.5 V with respect to the saturated calomel electrode when both the ions are present at concentrations of not less than 5 millimoles/litre in the solution. On the other hand, when it is intended to form an intimately adhering deposit on the electrode by galvanostatic electrolysis, the solution should be prepared at such concentrations that the electrode potential is always kept in the range from 0.5 V to 0.8 V with respect to the saturated calomel electrode and a constant current is maintained. Example 15 illustrates how the electrode potential varies when electrolytic solutions of different concentrations are subjected to galvanostatic electrolysis.

Example 15

A clear brown solution which was essentially the same as prepared in Example 13 and contained equal concentrations of iron (III) ion and hexacyanoferrate (II) ion was used. This solution was diluted with water to prepare five electrolytic solutions which contained both the iron (III) ion and the hexacyanoferrate (III) ion at concentrations of 25, 16, 12.5, 10 and 5 millimoles/litre. A working electrode, a counter electrode, and a reference electrode as used in Example 13 were connected to a potentiostat. With the working electrode acting as the cathode, galvanostatic electrolysis was effected at a current density of 50 $\mu A/cm^2$ while the potential of the working electrode with respect to the saturated calomel electrode was measured during electrolysis to monitor its variations. The result is shown in Fig. 6.

As seen from Fig. 6, the potential of the working electrode was always kept at a constant level in the range from about 0.8 V to about 0.5 V with respect to the saturated calomel electrode during electrolysis when both the ions were present at concentrations of not less than 25 millimoles/litre in the solutions,

whereas the working electrode potential changed to a level more negative than 0.5 V during electrolysis when both the ions were present at concentrations of lower than 25 millimoles/litre in the solutions.

Next, the iron (III) hexacyanoferrate (II) deposit formed on the working electrode from the solutions was determined for adhesion to the electrode surface by performing a peel test using an adhesive cellophane tape. Good adhesion was found for iron (III) hexacyanoferrate (II) deposited from solutions at sufficient concentrations to keep the electrode potential in the range of 0.8 V to 0.5 V during electrolysis whereas solutions at concentrations at which the electrode potential would change to a value more negative than 0.5 V resulted in poor adhesion.

It was found in Example 15 that a deposit of iron (III) hexacyanoferrate (II) could be formed as an insoluble film intimately adhering to the electrode surface when electrolysis was effected with the electrode potential during electrolysis within the range from about 0.8 V to about 0.5 V with respect to the saturated calomel electrode, as in Examples 13 and 14. As seen from Examples 14 and 15, to form an intimately adhering film on the electrode surface by galvanostatic electrolysis, the electrode potential should always be kept in the range from about 0.8 V to about 0.5 V during electrolysis, and for this purpose, a constant current which provides a current density lower than the upper limit defined by the concentration of the solution may be given (Example 14), or alternatively, an electrolytic solution which is prepared with an ion concentration higher than the lower limit defined by a given current density may be used (Example 15).

Generally stated, to form a deposit of iron (III) hexacyanoferrate (II) intimately adhering to and covering the electrode surface by galvanostatic electrolysis, the current density and electrolytic solution concentration should be selected such that the electrode potential does not abruptly change to a more negative potential during electrolysis. Although the exact range of desired electrode potential may vary slightly with the type and concentration of particular iron (III) and hexacyanoferrate (III) salts used, the type and concentration of a particular supporting electrolyte used for pH adjustment or other purposes, or the material of the electrode, the above-described general expression properly defines the range of electrolytic conditions encompassed by the present invention.

In all the examples for the sake of avoiding complexity of description, the solutions used as electrolytes contain equal concentrations of iron (III) ion and hexacyanoferrate (III) ion. However, solutions used in the present invention need not necessarily contain equal concentrations of iron (III) ion and hexacyanoferrate (III) ion. A solution containing different concentrations of the two ions was used in Example 16.

Example 16

1) An aqueous solution containing iron (III) chloride at a concentration of 10 millimoles/litre as the iron (III) ion-containing solution was mixed with an equal volume of an aqueous solution containing potassium hexacyanoferrate (III) at a concentration of 50 millimoles/litre as the hexacyanoferrate (III) ion-containing solution, to produce a clear brown solution.

A working electrode in the form of a platinum plate having an area of 0.1 $cm^2$ and a counter electrode in the form of a platinum plate having an area of 10 $cm^2$ were used, and potentiostatic electrolysis was effected such that the working electrode was polarised at 0.5 V with respect to a saturated calomel electrode, forming a layer of iron (III) hexacyanoferrate (II) as a blue, insoluble electro-deposit on the surface of the working electrode.

An aqueous solution containing iron (III) chloride at a concentration of 50 millimoles/litre as the iron (III) ion-containing solution was mixed with an equal volume of an aqueous solution containing potassium hexacyanoferrate (III) at a concentration of 10 millimoles/litre as the hexacyanoferrate (III) ion-containing solution, to produce a clear brown solution.

Potentiostatic electrolysis was effected under the same conditions as described in 1), forming iron (III) hexacyanoferrate (II) as a blue, insoluble deposit on the surface of the working electrode.

As seen from Example 16, no limitation should be imparted to the ratio of concentration of the iron (III) ion to the hexacyanoferrate (III) ion in the solutions used in the practice of the present invention.

In forming an iron (III) hexacyanoferrate (II) deposit of high quality as an insoluble electrodeposited film intimately adhering to the electrode surface, the pH value of solutions should be regulated to fall in the optimum range before use. When solutions have higher pH values in the neutral to alkaline range are used, the iron (III) ion undergoes hydrolysis and iron hydroxide is thus codeposited. With lower pH values in the strongly acidic range, the acid undergoes decomposition, resulting in poor adhesion. Example 17 was carried out to find that the optimum pH range for solutions is in an acidic range of between pH 0.3 and pH 5.

Example 17

Solutions which were essentially the same as used in Example 14 but with pH adjusted to pH 0.2, 0.3, 0.5, 0.8, 1.5, 2.0, 3.0, 4.0, 5.0, 6.0, 7.0 and 9.0 with hydrochloric acid and optionally, with 1N potassium hydroxide solution. These solutions having different pH values were subjected to galvanostatic electrolysis for 2 minutes at a current density of 50 $\mu A/cm^2$ in the manner described in Example 13. Iron (III) hexacyanoferrate (II) was deposited on the surface of the working electrode and adhesion was determined by performing a peel test using an adhesive cellophane tape.

It was found that the deposits from those solutions having pH values within the range from pH 0.3 to

5.0 exhibited good adhesion whereas the deposits from those solutions having pH values of 0.2 or higher than 6.0 exhibited poor adhesion.

As illustrated in a number of the examples, the process according to the present invention for making iron (III) hexacyanoferrate (II) comprises using a solution containing iron (III) ion in admixture with hexacyanoferrate (III) ion as an electrolyte, and forming on the cathode surface as a blue insoluble deposit, is of great utility in commercial applications because

(1) the synthesis of iron (III) hexacyanoferrate (II) can be carried out by externally controlling the rate of reaction and the quantity of the product formed to any desired values;

(2) iron (III) hexacyanoferrate (II) can be directly formed on the electrode surface as an intimately adhering blue insoluble deposit by appropriately setting electrolytic conditions including the composition and pH range of the electrolyte, electrolytic potential and current; and

(3) the electrolytic process permits iron (III) hexacyanoferrate (II) to form a uniform contiguous film having a precise composition of $Fe_4\{Fe(CN)_6\}_3$ on a solid electrode, etc.

An iron (III) hexacyanoferrate (II) film made by a process according to the present invention may be used as the electrochromic material in an electrochromic display device.

Fig. 7A and 7B show the lattice structures of insoluble Prussian blue, and soluble Prussian blue, respectively, water molecules having been omitted for clarity. As apparent, both insoluble Prussian blue and soluble Prussian blue are mixed valence complexes having a three-dimensional lattice structure in which a cyano group links Fe(II) and Fe(III). The C atom of the cyano group coordinates with Fe(II) and the N atom of the cyano group coordinates with Fe(III). Iron atoms of different oxidation numbers, that is, Fe(III) and Fe(II) coexist in a common compound, and for this reason, the compound is called a mixed valence complex. The aesthetic blue colour inherent to Prussian blue is attributable to the mixed valence absorption band due to the coexistence of iron atoms of different oxidation numbers in the single compound as described above. If all the Fe(III) atoms in the crystal are reduced into Fe(II), the crystal loses its blue colour and becomes colourless while the crystalline lattice structure itself remains unchanged. An electrochromic display is based on the principle that the valence of Fe(III) is reversibly changed between trivalence and divalence by an electrochemical oxidation-reduction to change its colour, and this reaction may be represented by equations (6) or (6′).

$$\underset{\text{(blue)}}{M^+Fe(III)[Fe(II)(CN)_6]+M^+} \underset{-e^-}{\overset{+e^-}{\rightleftarrows}} \underset{\text{(colorless)}}{M^+{}_2Fe(II)[Fe(II)(CN)_6]} \qquad (6)$$

$$\underset{\text{(blue)}}{Fe(III)_4[Fe(II)(CN)_6]_3+4M^+} \underset{-4e^-}{\overset{+re^-}{\rightleftarrows}} \underset{\text{(colorless)}}{M^+{}_4Fe(II)_4[Fe(II)(CN)_6]_3} \qquad (6')$$

wherein $M^+$ represents a monovalent cation such as $Li^+$, $Na^+$, $K^+$, $Rb^+$, $Gs^+$, $NH_4^+$, etc.

An electrochromic display device having an iron (III) hexacyanoferrate (II) salt as the electrochromic material utilizes the colour change due to the electrochemical reaction of a layer of the iron (III) hexacyanoferrate (II) salt formed on the surface of a display electrode as a contiguous uniform thin film of an insoluble mixed valence complex having a three-dimensional lattice structure. Consequently, the colour may be always developed at a given density which depends only on the thickness of the layer. Furthermore, as will be appreciated from equations (6) and (6′), the reaction is a stoichiometric one-electron or four-electron transfer reaction. Thus the electrochromic display device is easy to drive because the amount of charge need not be precisely controlled.

Prussian blue is chemically stable as is evidenced by the fact that it has long been used in a wide variety of applications, for example, in paint and printing ink since its discovery in 1704. By using an iron (III) hexacyanoferrate (II) salt, made by a process according to the present invention as the electrochromic material of an electrochromic display device, the electrochromic display device is relatively easy to drive to develop an aesthetic Prussian blue colour display of a given density and the electrochromic material is chemically stable as shown by its traditional usage.

A film of iron (III) hexaferrate (II) made by a process according to the present invention may be used as the active material of a secondary battery. The film electro-deposited on an electrode shows an excellent reversibility for electrochemical redox cycles within the range of potentials between +0.6 V and −0.2 V vs SCE without any structural deformation of the film.

Fig. 8 shows a button-type battery, utilizing iron (III) hexacyanoferrate (II) made by a process according to the present invention. The battery comprises a cathode ion 1, an anode ion 7 and packing 3 therebetween. A pellet 6 is made of acetylene black mixture with a binder of polyethylene modified with iron (III) hexacyanoferrate (II) by the process set out in Example 8 although the working electrode material was different. The pellet 6 forms the active anode, amalgamised zinc granules 2 being used as the active cathode. Cellophane paper impregnated with 1M ammonium chloride solution constitutes an electrolyte 4. The battery also has a separator 5.

The open circuit voltage of the battery was 1.6 V and the battery had a 0.1 mA/cm$^2$ charge/discharge characteristic shown in Fig. 9. The charging efficiency was found to be above 95% after 100 charge-discharge cycles.

**Claims**

1. A process for making iron (III) hexacyanoferrate (II) characterised by comprising the steps of immersing a pair of electrodes in an electrolyte including an iron (III) ion-containing solution and a hexacyanoferrate (III) ion-containing solution in admixture, and effective electrolysis with one of said pair of electrodes acting as an anode and the other acting as a cathode, to deposit iron (III) hexacyanoferrate (II) on the surface of the cathode.

2. A process as claimed in claim 1 characterised in that the cathode is made of an inert metal or an electrically conductive or semi-conductive metal oxide or a metal or electrically non-conductive material coated with an inert metal and/or electrically conductive or semi-conductive metal oxide.

3. A process as claimed in claim 2 characterised in that the inert metal is any one or more of platinum, gold, rhodium, palladium, ruthenium, silver, stainless steel and carbon.

4. A process as claimed in claim 2 or 3 characterised in that the said electrically non-conductive material is a ceramic material, glass or a synthetic resin material.

5. A process as claimed in any preceding claim characterised in that the iron (III) ion-containing solution is a solution of one or more of an iron (III) salt of an inorganic acid, an iron (III) salt of an organic acid and an iron (III) ammonium salt.

6. A process as claimed in claim 5 characterised in that the iron (III) ion-containing solution is a solution of one or more of iron (III) chloride, iron (III) sulphate, iron (III) perchlorate, iron (III) nitrate, iron (III) phosphate, and iron (III) pyrophosphate, iron (III) oxalate, iron (III) acetate, iron (III) citrate, iron (III) lactate, and iron (III) tartrate, iron (III) ammonium sulphate iron (III), ammonium oxalate and iron (III) ammonium citrate.

7. A process as claimed in any preceding claim characterised in that the hexacyanoferrate (III) ion-containing solution is a solution of one or more of potassium hexacyanoferrate (III), sodium hexacyanoferrate (III), lithium hexacyanoferrate (III), rubidium hexacyanoferrate (III) and ammonium hexacyanoferrate (III).

8. A process as claimed in any preceding claim characterised in that the electrolyte includes an inorganic acid and/or an organic acid and/or a salt thereof.

9. A process as claimed in claim 8 in which said electrolyte includes one or more of hydrochloric acid, sulphuric acid, perchloric acid, nitric acid, phosphoric acid, pyrophosphoric acid, hexafluorophosphoric acid, boric acid, tetrafluoroboric acid, carbonic acid, oxalic acid, acetic acid, citric acid, lactic acid, tartaric acid, phthalic acid, a lithium salt, a sodium salt, a potassium salt, a rubidium salt, a calcium salt, a magnesium salt, an ammonium salt and a tetraalkyl ammonium salt of the foregoing acids.

10. A process as claimed in any preceding claim characterised in that the iron (III) ion-containing solution is an aqueous solution containing iron (III) ion at a concentration of not less than 10 millimoles/litre, the hexacyanoferrate (III) ion-containing solution is an aqueous solution containing hexacyanoferrate (III) ion at a concentration of not less than 10 millimoles/litre, the iron (III) and the hexacyanoferrate (III) ion in the electrolyte being at concentrations of at least 5 millimoles/litre.

11. A process as claimed in any preceding claim characterised in that the pH of said electrolyte is in the range pH 0.3 to pH 5.

12. A process as claimed in any preceding claim characterised in that the electrolysis is potentiostatic electrolysis in which a saturated calomel reference electrode for determining a reference potential is immersed in the electrolyte, the electrode potential of the cathode being controlled so as to be constant in the range between −0.2 V and +0.8 V.

13. A process as claimed in any of claims 1 to 11 characterised in that the electrolysis is galvanostatic electrolysis comprising immersing said electrodes in the electrolyte and supplying a constant current between the electrodes such that the polarization potential of the cathode does not rapidly become negative and is kept at a substantially constant potential during the course of electrolysis, the electrolytic current density being substantially constant between 1 μA/cm$^2$ and 1 mA/cm$^2$ relative to the surface area of the cathode.

14. A process for synthesizing iron (III) hexacyanoferrate (II) comprising the steps of immersing a pair of electrodes in a solution mixture of an iron (III) ion-containing solution and a hexacyanoferrate (III) ion-containing solution, and effecting electrolysis with one of said pair of electrodes being an anode and the other being a cathode, depositing iron (III) hexacyanoferrate (II) as a blue electrolytic product on the surface of the cathode.

**Revendications**

1. Un procédé pour fabriquer l'hexacyanoferrate (II) de fer (III), caractérisé en ce qu'il comprend les étapes d'immersion d'une paire d'électrodes dans un électrolyte contenant un mélange d'une solution contenant des ions fer (III) et d'une solution contenant des ions hexacyanoferrates (III) et d'électrolyse

efficace avec l'une desdites deux électrodes agissant comme anode et l'autre agissant comme cathode pour déposer l'hexacyanoferrate (II) de fer (III) sur la surface de la cathode.

2. Un procédé selon la revendication 1, caractérisé en ce que la cathode est faite d'un métal inerte ou d'un oxyde métallique électriquement conducteur ou semi-conducteur ou d'un métal ou d'un matériau électriquement non conducteur revêtu par un métal inerte et/ou un oxyde métallique électriquement conducteur ou semi-conducteur.

3. Un procédé selon la revendication 2, caractérisé en ce que le métal inerte consiste en un quelconque ou plusieurs parmi le platine, l'or, le rhodium, le palladium, le ruthénium, l'argent, l'acier inoxydable et le carbone.

4. Un procédé selon la revendication 2 ou 3, caractérisé en ce que ledit matériau électriquement non conducteur est un matériau céramique, un verre ou une résine synthétique.

5. Un procédé selon l'une quelconque des revendications précédentes, caractérisé en ce que la solution contenant des ions fer (III) est une solution d'un ou plusieurs sels choisis parmi les sels de fer (III) d'acides inorganiques, les sels de fer (III) d'acides organiques et les sels de fer (III) et d'ammonium.

6. Un procédé selon la revendication 5, caractérisé en ce que la solution contenant des ions fer (III) est une solution d'un ou plusieurs composés choisis parmi le chlorure de fer (III), le sulfate de fer (III), le perchlorate de fer (III), le nitrate de fer (III), le phosphate de fer (III) et le pyrophosphate de fer (III), l'oxalate de fer (III), l'acétate de fer (III), le citrate de fer (III), le lactate de fer (III) et le tartrate de fer (III), le sulfate de fer (III) et d'ammonium, l'oxalate de fer (III) et d'ammonium et le citrate de fer (III) et d'ammonium.

7. Un procédé selon l'une quelconque des revendications précédentes, caractérisé en ce que la solution contenant des ions hexacyanoferrates (III) est une solution d'un ou plusieurs composés choisis parmi l'hexacyanoferrate (III) de potassium, l'hexacyanoferrate (III) de sodium, l'hexacyanoferrate (III) de lithium, l'hexacyanoferrate (III) de rubidium et l'hexacyanoferrate (III) d'ammonium.

8. Un procédé selon l'une quelconque des revendications précédentes, caractérisé en ce que l'électrolyte contient un acide inorganique et/ou un acide organique et/ou un de leurs sels.

9. Un procédé selon la revendication 8, dans lequel ledit électrolyte comprend un ou plusieurs composés choisis parmi l'acide chlorhydrique, l'acide sulfurique, l'acide perchlorique, l'acide nitrique, l'acide phosphorique, l'acide pyrophosphorique, l'acide hexafluophosphorique, l'acide borique, l'acide tétrafluoborique, l'acide carbonique, l'acide oxalique, l'acide acétique, l'acide citrique, l'acide lactique, l'acide tartrique, l'acide phtalique et les sels de lithium, de sodium, de potassium, de rubidium, de calcium, de magnésium, d'ammonium et de tétraalkylammonium des acides précédents.

10. Un procédé selon l'une quelconque des revendications précédentes, caractérisé en ce que la solution contenant des ions fer (III) est une solution aqueuse contenant des ions de fer (III) à une concentration de pas moins de 10 mmol/l, la solution contenant des ions hexacyanoferrates (III) est une solution aqueuse contenant des ions hexacyanoferrates (III) à une concentration de pas moins de 10 mmol/l, et les ions fer (III) et les ions hexacyanoferrates (III) dans l'électrolyte étant à des concentrations d'au moins 5 mmol/l.

11. Un procédé selon l'une quelconque des revendications précédentes, caractérisé en ce que le pH dudit électrolyte est dans la gamme de 0,3 à 5.

12. Un procédé selon l'une quelconque des revendications précédentes, caractérisé en ce que l'électrolyse est une électrolyse potentiostatique dans laquelle on plonge dans l'électrolyte une électrode de référence saturée au calomel pour déterminer un potential de référence, le potentiel d'électrode de la cathode étant réglé de manière à être constant dans la gamme de $-0,2$ à $+0,8$ V.

13. Un procédé selon l'une quelconque des revendications 1 à 11, caractérisé en ce que l'électrolyse est une électrolyse galvanostatique consistant à immerger lesdites électrodes dans l'électrolyte et à fournir un courant constant entre les électrodes de manière que le potentiel de polarisation de la cathode ne devienne pas rapidement négatif et soit maintenu à un potentiel sensiblement constant au cours de l'électrolyse, la densité de courant d'électrolyse étant sensiblement constante entre 1 $\mu A/cm^2$ et 1 $mA/cm^2$, par rapport à la surface de la cathode.

14. Un procédé pour synthétiser l'hexacyanoferrate (II) de fer (III), comprenant les étapes d'immersion d'une paire d'électrodes dans un mélange d'une solution contenant des ions de fer (III) et d'une solution contenant des ions hexacyanoferrates (III), et d'électrolyse avec l'une desdites deux électrodes en anode et l'autre en cathode, en déposant l'hexacyanoferrate (II) de fer (III) sous forme d'un produit électrolytique bleu sur la surface de la cathode.

**Patentansprüche**

1. Verfahren zur Herstellung von Eisen(III)-hexacyanoferrat-(II), dadurch gekennzeichnet, daß es die Stufen umfaßt: Eintauchen eines Elektrodenpaares in einen Elektrolyten, der eine Eisen(III)-ionen enthaltende Lösung und eine Hexacyanoferrat(III)-ionen enthaltende Lösung in Mischung umfaßt, und effektive Elektrolyse, wobei eine Elektrode des Elektrodenpaares als Anode fungiert und die andere als Kathode, um Eisen(III)-hexacyanoferrat(II) an der Oberfläche der Kathode abzuscheiden.

2. Verfahren nach Anspruch 1, dadurch gekennzeichnet, daß die Kathode aus einem inerten Metall oder einem elektrisch leitfähigen oder halb leitfähigen Metalloxid oder einem Metall oder elektrisch nicht

leitfähigen Material, das mit einem inerten Metall und/oder elektrisch leitfähigen oder halb leitfähigen Metalloxid beschichtet ist, aufgebaut ist.

3. Verfahren nach Anspruch 2, dadurch gekennzeichnet, daß das inerte Metall eines oder mehr als eines aus Platin, Gold, Rhodium, Palladium, Ruthenium, Silber, rostfreiem Stahl und Kohlenstoff ist.

4. Verfahren nach Anspruch 2 oder 3, dadurch gekennzeichnet, daß das elektrisch nicht leitfähige Material ein keramisches Material, Glas oder ein synthetisches Harzmaterial ist.

5. Verfahren nach einem der vorhergehenden Ansprüche, dadurch gekennzeichnet, daß die Eisen(III)-ionen enthaltende Lösung eine Lösung von einem oder mehreren eines Eisen(III)-Salzes einer anorganischen Säure, eines Eisen(III)-Salzes einer organischen Säure und eines Eisen(III)-ammoniumsalzes ist.

6. Verfahren nach Anspruch 5, dadurch gekennzeichnet, daß die Eisen(III)-Ionen enthaltende Lösung eine Lösung von einem oder mehr als einem Salz aus der Gruppe Eisen(III)-chlorid, Eisen(III)-sulfat, Eisen(III)-perchlorat, Eisen(III)-nitrat, Eisen(III)-phosphat und Eisen(III)-pyrophosphat, Eisen(III)-oxalat, Eisen(III)-acetat, Eisen(III)-citrat, Eisen(III)-lactat, und Eisen(III)-tartrat, Eisen(III)-ammoniumsulfat, Eisen(III)-ammoniumoxalat und Eisen(III)-ammoniumcitrat ist.

7. Verfahren nach einem der vorhergehenden Ansprüche, dadurch gekennzeichnet, daß die Hexacyanoferrat(III)-Ionen enthaltende Lösung eine Lösung von einem oder mehr als einem Salz aus der Gruppe Kaliumhexacyanoferrat(III), Natriumhexacyanoferrat(III), Lithiumhexacyanoferrat(III), Rubidiumhexacyanoferrat(III) und Ammoniumhexacyanoferrat(III) ist.

8. Verfahren nach einem der vorhergehenden Ansprüche, dadurch gekennzeichnet, daß der Elektrolyt eine anorganische Säure und/oder eine organische Säure und/oder ein Salz davon enthält.

9. Verfahren nach Anspruch 8, dadurch gekennzeichnet, daß der Elektrolyt eine oder mehr als eine Säure aus der Gruppe Chlorwasserstoffsäure, Schwefelsäure, Perchlorsäure, Salpetersäure, Phosphorsäure, Pyrophosphorsäure, Hexafluorphosphorsäure, Borsäure, Tetrafluorborsäure, Kohlensäure, Oxalsäure, Essigsäure, Zitronensäure, Milchsäure, Weinsäure, Phthalsäure, ein Lithiumsalz, ein Natriumsalz, ein Kaliumsalz, ein Rubidiumsalz, ein Calciumsalz, ein Magnesiumsalz, ein Ammoniumsalz und ein Tetraalkylammoniumsalz der vorhergehenden Säuren enthält.

10. Verfahren nach einem der vorhergehenden Ansprüche, dadurch gekennzeichnet, daß die Eisen(III)-Ionen enthaltende Lösung eine wäßrige Lösung ist, die Eisen(III)-Ionen in einer Konzentration von nicht weniger als 10 mMol/l enthält, die Hexacyanoferrat(III)-Ionen enthaltende Lösung eine wäßrige Lösung ist, die Hexacyanoferrat(III)-Ionen in einer Konzentration von nicht weniger als 10 mMol/l enthält, und die Eisen(III)- und die Hexacyanoferrat(III)-Ionen im Elektrolyten in Konzentrationen von mindestens 5 mMol/l vorliegen.

11. Verfahren nach einem der vorhergehenden Ansprüche, dadurch gekennzeichnet, daß der pH-Wert des Elektrolyten im Bereich von pH 0,3 bis pH 5 liegt.

12. Verfahren nach einem der vorhergehenden Ansprüche, dadurch gekennzeichnet, daß die Elektrolyse eine potentiostatische Elektrolyse ist, bei der eine gesättigte Calomel-Bezugselektrode zur Bestimmung eines Bezugspotentials in den Elektrolyten eingetaucht ist, und das Elektrodenpotential der Kathode so reguliert wird, daß es im Bereich zwischen $-0{,}2$ V und $+0{,}8$ V konstant ist.

13. Verfahren nach einem der Ansprüche 1 bis 11, dadurch gekennzeichnet, daß die Elektrolyse eine galvanostatische Elektrolyse ist, bei der die Elektroden in den Elektrolyten getaucht werden und ein konstanter Strom zwischen den Elektroden so zugeführt wird, daß das Polarisationspotential der Kathode nicht rasch negativ wird und bei einem im wesentlichen konstanten Potential während des Verlaufes der Elektrolyse gehalten wird, und die elektrolytische Stromdichte im wesentlichen zwischen 1 $\mu A/cm^2$ und 1 $mA/cm^2$ bezogen auf die Oberfläche der Kathode konstant ist.

14. Verfahren zur Synthese von Eisen(III)-hexacyanoferrat(II), das die Stufen umfaßt: Eintauchen eines Elektrodenpaares in eine Lösungsmischung einer Eisen(III)-Ionen enthaltenden Lösung und einer Hexacyanoferrat(III)-Ionen enthaltenden Lösung, und Durchführen der Elektrolyse mit einer Elektrode des Elektrodenpaares als Anode und der anderen als Kathode, und Abscheiden von Eisen(III)-hexacyanoferrat(II) als blaues an der Oberfläche der Kathode elektrolytisch abgeschiedenes Produkt.

Fig.1.

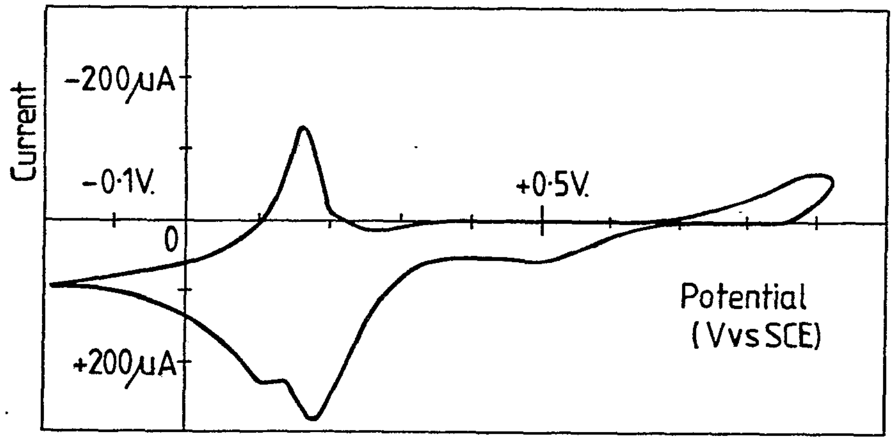
Current
-200µA
-0·1V.
+0·5V.
0
Potential
(V vs SCE)
+200µA

Fig.2.

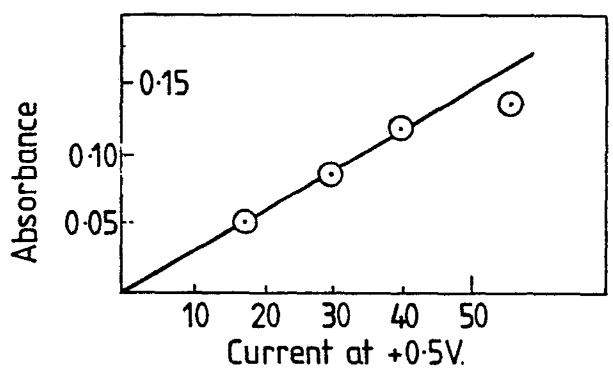
Absorbance
0·15
0·10
0·05
10
20
30
40
50
Current at +0·5V.

Fig.3.

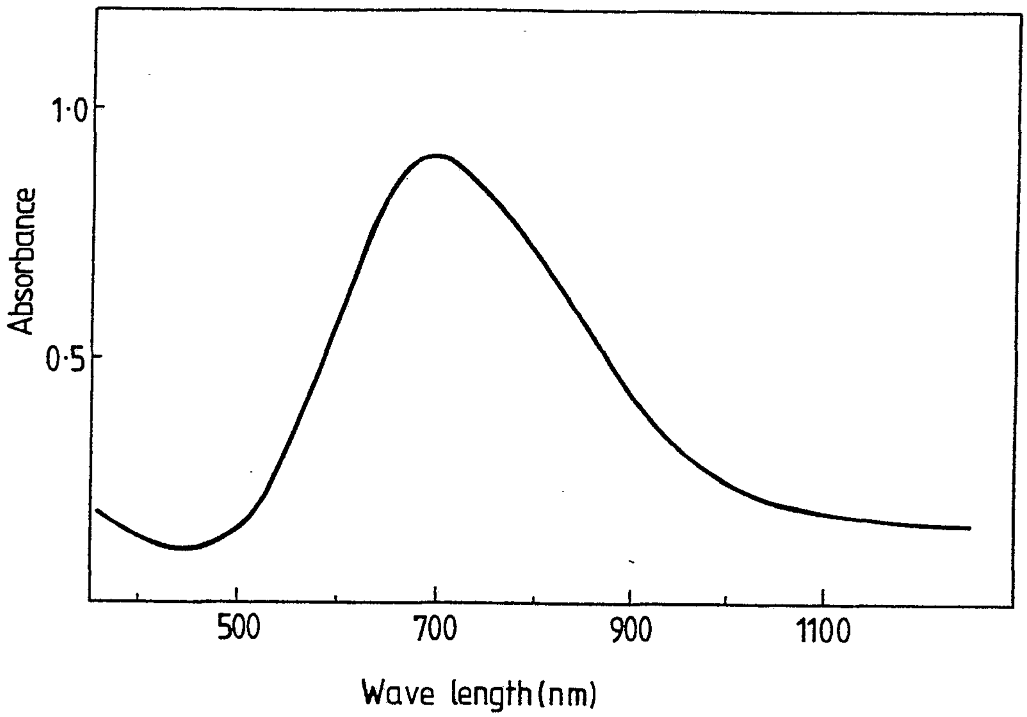
1·0
0·5
Absorbance
500
700
900
1100
Wave length (nm)

Fig.4.

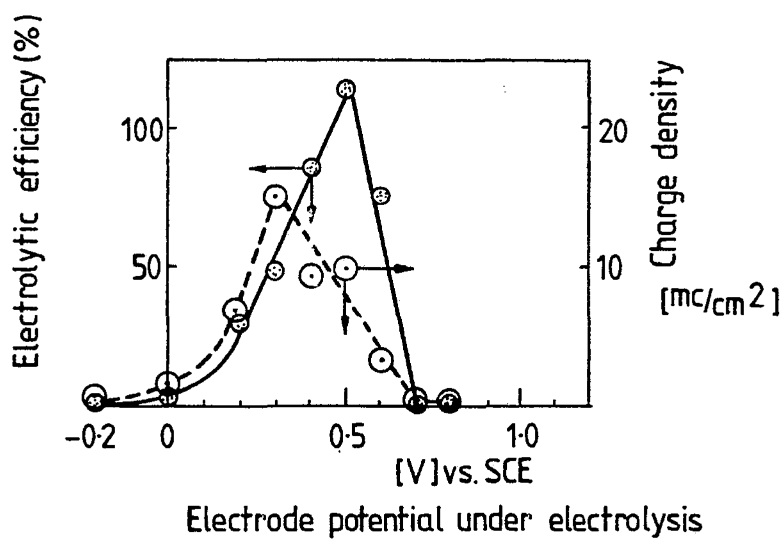
Electrolytic efficiency (%)
100
50
20
10
Charge density
[mc/cm2]
-0·2
0
0·5
1·0
[V] vs. SCE
Electrode potential under electrolysis

Fig.5.

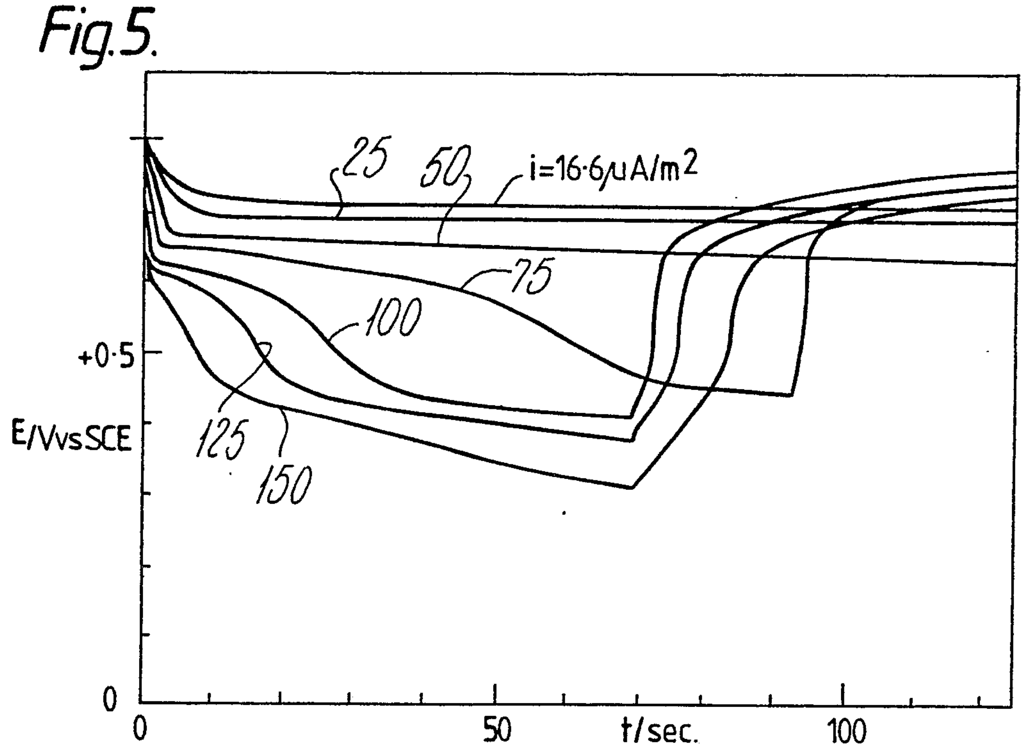
25
50
i=16·6 μA/m2
75
100
125
150
+0·5
E/VvsSCE
0
0
50
t/sec.
100

Fig.6.

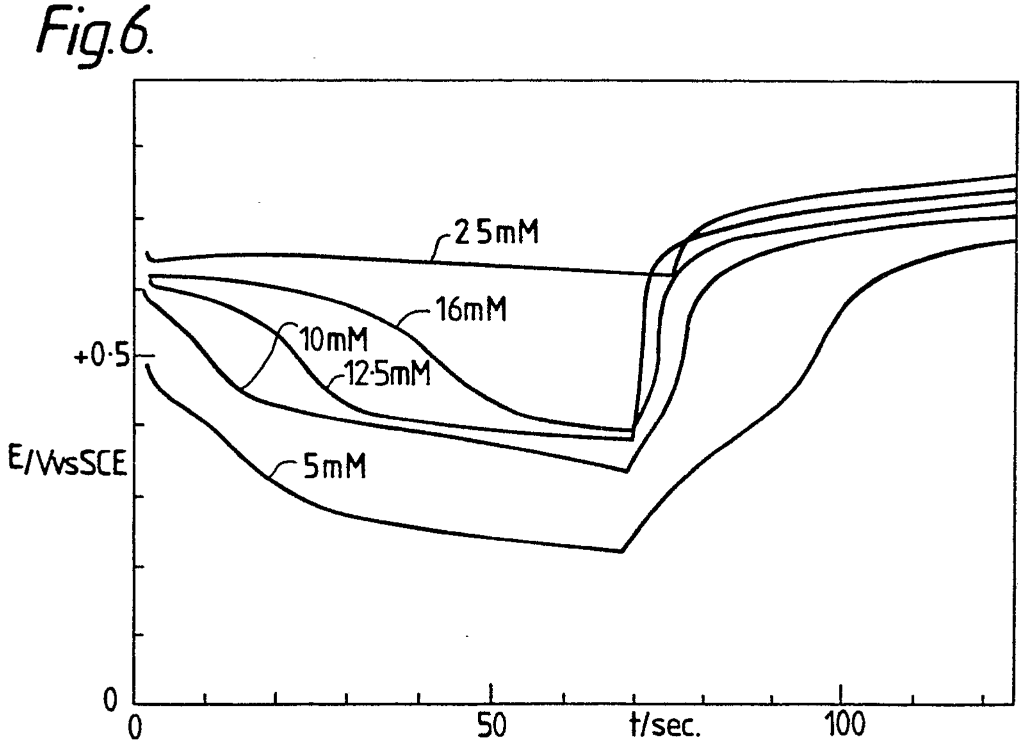
25mM
16mM
10mM
12·5mM
5mM
+0·5
E/VvsSCE
0
0
50
t/sec.
100

Fig.7A.

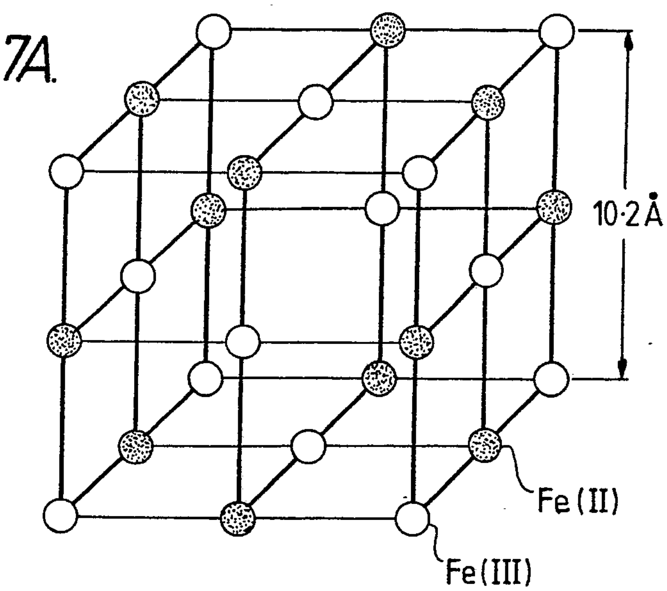


Fig.7B.

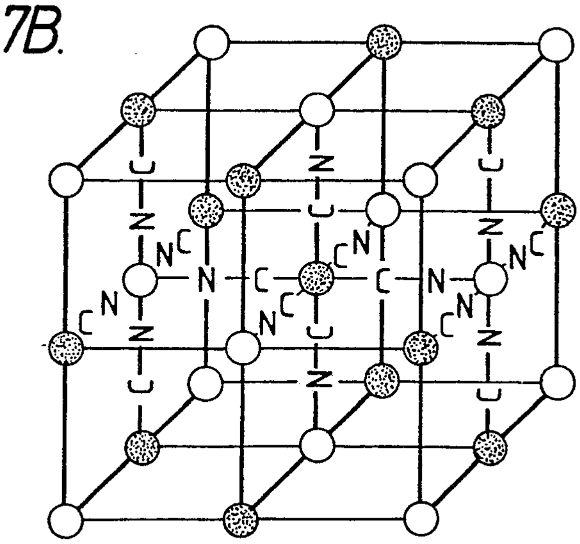

Fig.8.

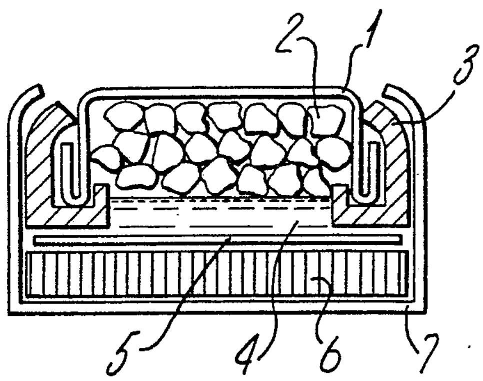
2
1
3
5
4
6
7

Fig.9.

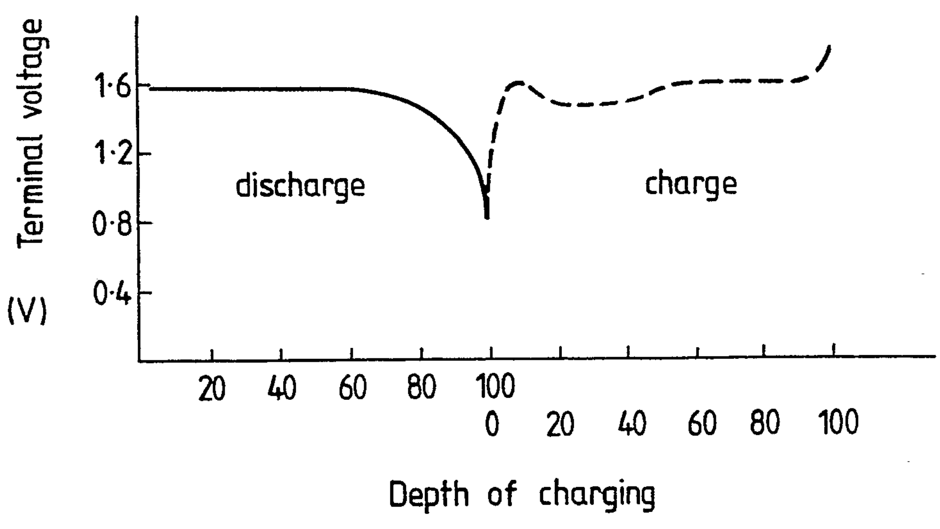
Terminal voltage
(V)
1·6
1·2
0·8
0·4
discharge
charge
20
40
60
80
100
0
20
40
60
80
100
Depth of charging